# EUROPÄISCHE PATENTANMELDUNG

(11) **EP 1 300 580 A1**
(43) Veröffentlichungstag der Anmeldung: **09.04.2003**
(21) Anmeldenummer: 01123962.1
(22) Anmeldetag: 08.10.2001
(51) Int. Cl.: F02M 35/10, B29C 45/14

(54) **Ansaugkrümmer aus Kunststoff sowie Verfahren zu dessen Herstellung**

(71) Anmelder: Ford Global Technologies, Inc., A subsidiary of Ford Motor Company, Dearborn, Michigan 48126 (US)
(72) Erfinder: Kuhlen, Morten August Herbert, 41238 Moenchengladbach (DE)
(74) Vertreter: Drömer, Hans-Carsten, Dipl.-Ing.

(57) **Zusammenfassung**

Die Erfindung betrifft einen Ansaugkrümmer aus Kunststoff für eine Brennkraftmaschine, bei welchem die Dichtungen (5) integral mit dem Ansaugkrümmer ausgebildet und insbesondere in den Flanschen (8) desselben angeordnet sind. Ein derartiger Ansaugkrümmer kann hergestellt werden, indem eine Gußform (1, 2, 3) für den Krümmer inklusive der Dichtungsbereiche mit dem Material für die Dichtungsbereiche einerseits und dem Material des Ansaugkrümmers andererseits gefüllt wird. Alternativ kann der Ansaugkrümmer insgesamt aus demselben Material bestehen, wobei das Füllen der Dichtungsbereiche innerhalb einer Gußform unter anderen Prozeßbedingungen erfolgt als das Füllen der übrigen Bereiche.

## Beschreibung

Die Erfindung betrifft einen Ansaugkrümmer aus Kunststoff sowie ein Verfahren zur Herstellung eines derartigen Ansaugkrümmers.

Ansaugkrümmer werden bei Brennkraftmaschinen verwendet, um dem Motor Verbrennungsluft zuzuführen. Bekannte Ansaugkrümmer werden überwiegend aus thermoplastischen Kunststoffen hergestellt und über angeformte Flansche mit dem Zylinderkopf des Motors bzw. sonstigen Einrichtungen des Kraftfahrzeugs verbunden. Zur Abdichtung der Verbindungen werden dabei in der Regel Gummidichtungen an den Flanschen vorgesehen. Derartige Gummidichtungen müssen separat hergestellt und bei der Montage des Ansaugkrümmers einzeln eingesetzt werden. Dies ist zum einen sehr zeitaufwendig, zum anderen kann es durch nicht ordnungsgemäß eingebrachte Dichtungen oder Herausfallen der Dichtungen auch zu Funktionsfehlern des montierten Ansaugkrümmers kommen.

Aus der WO 00/23241 ist ein Verfahren zur Herstellung eines Thermoplastbauteils mit einer eingespritzten Dichtung bekannt, wobei beim Spritzen des Bauteils eine Nut mit hochstehenden Rändern zur späteren Aufnahme der Dichtung vorgesehen ist. Nach Verfestigung des Thermoplastbauteils wird in die Nut eine Dichtung aus einem anderen Material eingespritzt, wobei die Ränder der Nut ein Überspritzen verhindern. Schließlich werden die Ränder der Nut umgeformt beziehungsweise eingedrückt, um die Dichtung in der Nut zurückzuhalten.

In der US 5 246 065 wird ein ähnliches Verfahren zum Einbringen einer Elastomer-Dichtung in die Nut eines thermoplastischen Bauteils beschrieben, wobei eine am Bauteil hochstehende Projektion nach Einfügen der Dichtung umgeformt wird, um die Dichtung im Bauteil zurückzuhalten.

Vor diesem Hintergrund bestand eine Aufgabe der vorliegenden Erfindung darin, einen Ansaugkrümmer und ein Verfahren zu seiner Herstellung zu schaffen, durch welchen bzw. durch welches eine einfachere Montage und eine höhere Funktionssicherheit gewährleistet wird.

Diese Aufgabe wird durch einen Ansaugkrümmer mit den Merkmalen des Patentanspruchs 1 sowie durch ein Herstellungsverfahren mit den Merkmalen des Patentanspruchs 4 gelöst.

Vorteilhafte Ausgestaltungen sind in den Unteransprüchen enthalten.

Der erfindungsgemäße Ansaugkrümmer aus Kunststoff ist dadurch gekennzeichnet, daß er Dichtungsbereiche, die zur Herstellung einer geschlossenen Verbindung mit anderen Bauteilen vorgesehen sind, enthält, wobei die Dichtungsbereiche aus einem weichen, elastischen Material bestehen und durch Stoffschluß mit dem Kernmaterial des Ansaugkrümmers verbunden sind.

Anders als bei bekannten Ansaugkrümmern werden somit keine separaten Dichtungen vorgesehen, um die Verbindungen des Ansaugkrümmers mit anderen Bauteilen abzudichten. Vielmehr werden integral mit dem Ansaugkrümmer Dichtungsbereiche ausgebildet, welche aus einem weichen und flexiblen Material bestehen und somit ähnlich wie die separaten Dichtungen eine Dichtungsfunktion ausüben können. Diese Dichtungsbereiche sind durch Stoffschluß oder Formschluß mit dem Ansaugkrümmer verbunden. Die integrale Ausbildung des Ansaugkrümmers mit den Dichtungen hat den Vorteil, daß bei der Montage des Ansaugkrümmers keine separaten Dichtungsringe oder dergleichen eingebaut werden müssen, wodurch ein sehr zeitaufwendiger und mühsamer Verarbeitungsschritt entfällt. Ferner ist sichergestellt, daß die Dichtungen bei der Montage immer am richtigen Ort zu liegen kommen und somit ihre Dichtungsfunktion optimal erfüllen können. Die Dichtungsbereiche sind dabei vorzugsweise an Flanschen des Ansaugkrümmers vorgesehen, welche der Verbindung des Ansaugkrümmers mit anderen Bauteilen dienen. Insbesondere kann ein Dichtungsbereich an dem Flansch des Ansaugkrümmers vorgesehen sein, über welchen dieser mit dem Zylinderkopf einer Brennkraftmaschine verbunden wird.

Die Dichtungsbereiche können vorzugsweise aus Gummi, aus einem geeigneten Kunststoff oder aus einem thermoplastischen Elastomer (TPE) bestehen.

Bei dem Kernmaterial des Ansaugkrümmers, aus welchem dieser überwiegend oder vollständig besteht, kann es sich insbesondere um die Kunststoffe Polyamid 6 (PA6), Polyamid 66 (PA66) und/oder einen anderen geeigneten thermoplastischen Kunststoff handeln. Derartige Kunststoffe haben sich als besonders geeignet für die Herstellung von Ansaugkrümmern erwiesen.

Die Erfindung betrifft ferner ein Verfahren zur Herstellung eines Kunststoff-Ansaugkrümmers der oben genannten Art. Bei diesem Verfahren wird das verflüssigte Material der späteren Dichtungsbereiche in eine Gußform an die, für die Dichtungen vorgesehenen, Stellen eingebracht. Separat hiervon wird das verflüssigte Kernmaterial des Ansaugkrümmers in der Regel zuvor in dieselbe Gußform eingebracht. Vorzugsweise werden die beiden Materialien in so dichter zeitlicher Reihenfolge in die Gußform eingespritzt, daß sie beide noch zur selben Zeit flüssig beziehungsweise weich sind. Das heißt, daß die zweite Komponente in die Gußform eingefüllt wird, solange die erste Komponente noch nicht vollständig erhärtet ist. Ein teilweises Vernetzen der ersten Komponente ist indes zulässig. Wichtig ist, daß die Prozeßwärme für beide Teilkomponenten ausgenützt wird. Durch den Kontakt im noch nicht vollständig erhärteten Zustand kann es an den Kontaktstellen der Materialien zu einer besonders innigen Verbindung, insbesondere zu einer teilweisen Vermischung und/oder wechselseitigen Eindiffusion kommen, was für einen Stoffschluß und / oder Formschluß zwischen den Materialien sorgt. Als Material für die Dichtungsbereiche sind insbesondere Gummi oder thermoplastische Elastomere geeignet, welche in verfestigtem Zustand verhältnismäßig weich und elastisch sind.

Gemäß einer zweiten Variante eines Herstellungsverfahrens für einen Ansaugkrümmer der vorstehend genannten Art wird eine Gußform für den Ansaugkrümmer inklusive der Dichtungsbereiche mit einem verflüssigten Material gefüllt, wobei das Füllen der Dichtungsbereiche innerhalb der Gußform unter Prozeßbedingungen erfolgt, welche die Entstehung eines weichen, flexiblen, elastischen Materials im ausgehärteten Zustand begünstigen. Die übrigen Bereiche der Gußform, die dem Kernkörper des Ansaugkrümmers entsprechen, werden dagegen unter Prozeßbedingungen gefüllt, die zu einem verhältnismäßig festen, starren Zustand des Materials führen. Bei diesem Verfahren ist die Herstellung des Ansaugkrümmers besonders einfach, da kein Materialwechsel beim Füllen der Gußform vorgenommen werden muß. Es müssen lediglich die Prozeßbedingungen wie zum Beispiel die Temperatur des eingefüllten Materials, der Druck des eingefüllten Materials, der Einschluß von Luft oder Gasen, die Verdichtung des eingefüllten Materials und dergleichen variiert werden.

Im Folgenden wird die Erfindung mit Hilfe der Figuren beispielhaft erläutert. Es zeigt:
Fig. 1 die Zusammensetzung einer Gußform für einen erfindungsgemäßen Ansaugkrümmer;
Fig. 2 die Herstellung der Kernbereiche in der zusammengesetzten Gußform nach Figur 1;
Fig. 3 die Herstellung der Dichtungsbereiche in der Gußform von Figur 2.

Die Figuren stellen schematisch die Prozeßschritte bei der Herstellung eines erfindungsgemäßen Ansaugkrümmers dar. Von dem Ansaugkrümmer selbst ist dabei nur stellvertretend ein rohrförmiger Stutzen 7 mit Befestigungsflanschen 8 und einem integrierten Dichtungsring 5 im Querschnitt dargestellt.

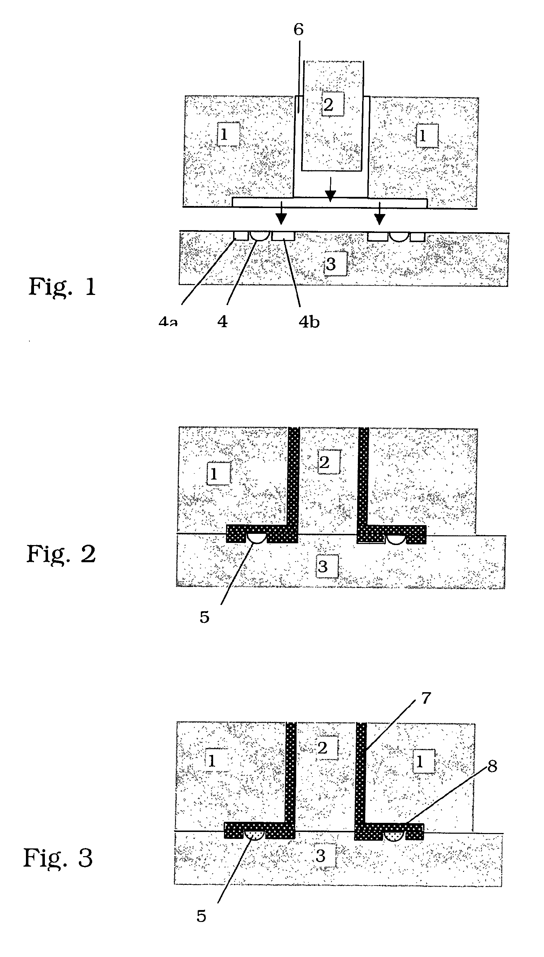

Figur 1 zeigt den Querschnitt durch eine Gußform in einer Explosionsdarstellung beziehungsweise während ihres Zusammenbaus. Die Gußform besteht aus einer Basis 3, auf welche ein Oberteil 1 mit einer zylindrischen Aussparung aufgesetzt wird. In die genannte Aussparung wird ein zylindrischer Stempel 2 eingesetzt, dessen Außendurchmesser kleiner ist als der Innendurchmesser der zylindrischen Aussparung im Oberteil 1. Auf diese Weise entsteht zwischen dem Stempel 2 und der Aussparung im Oberteil 1 ein Ringspalt 6.

Das Oberteil 1 weist ferner an seiner der Basis 3 zugewandten Seite eine breite ringförmige Vertiefung auf, welche in die zylindrische Aussparung übergeht. Diese ringförmige Vertiefung stellt den Platz für einen Flansch 8 bereit, welcher den im Ringspalt 6 erzeugten Stutzen 7 umgibt.

Ferner ist in der Basis 3 eine konzentrisch zur Stutzenachse kreisförmig umlaufende Nut 4 ausgebildet, deren Radius so gewählt ist, daß sie im Innenbereich des Flansches 8 verläuft. Diese Nut 4 stellt einen Dichtungsbereich dar, das heißt einen später von einer Dichtung 5 am fertigen Ansaugkrümmer eingenommenen Raum. Die beiden zusätzlich kreisförmig umlaufenden Nuten 4a, 4b werden vom Flanschmaterial mit ausgefüllt. Sie sind flacher als die für die Dichtung vorgesehene Nut 4, so daß während des bestimmungsgemäßen Einbaus des Ansaugkrümmers eine definierte Vorspannung der Dichtung 5 erzeugt wird und insbesondere die Dichtung nicht verpreßt wird, was wiederum durch ein dann möglicherweise auftretendes Fließen der Dichtung zu Funktionsfehlern führen kann.

In Figur 2 ist die Gußform im zusammengebauten Zustand von Basis 3, Oberteil 1 und Stempel 2 dargestellt. Ferner ist in Figur 2 erkennbar, daß bereits das Kernmaterial 7 des Ansaugkrümmers in die Gußform eingespritzt wurde. Dieses Kernmaterial füllt dann den Ringspalt 6 und die Flanschbereiche 8 aus und bildet den eigentlichen Körper des Ansaugkrümmers.

Bevor das gemäß Figur 2 eingefüllte Kernmaterial 7 vollständig erhärtet beziehungsweise vernetzt ist, wird gemäß Figur 3 das Dichtungsmaterial 5 in die Gußform eingespritzt. Hierbei kann es sich insbesondere um TPE handeln. Da beim Einspritzen des Dichtungsmaterials 5 das Kernmaterial noch nicht vollständig vernetzt und teilweise noch flüssig ist, kommt es zu einer innigen Verbindung und einem Stoffschluß zwischen dem Material der Dichtungsbereiche 5 und dem Kernmaterial 7. Der fertige Ansaugkrümmer, welcher nach Öffnen der Gußform (nicht dargestellt) erhalten wird, weist somit integral angeformte Dichtungen 5 auf, was eine erheblich vereinfachte Montage des Ansaugkrümmers in einem Motor ermöglicht.

## Patentansprüche

1. Ansaugkrümmer aus Kunststoff,
**dadurch gekennzeichnet, daß**
dieser Dichtungsbereiche (5) zur Herstellung einer geschlossenen Verbindung mit anderen Bauteilen aufweist, welche aus einem weichen, elastischen Material bestehen und durch Stoffschluß und / oder Formschluß mit dem Kernmaterial (7, 8) des Ansaugkrümmers verbunden sind.

2. Ansaugkrümmer nach Anspruch 1,
**dadurch gekennzeichnet, daß**
die Dichtungsbereiche (5) aus Gummi, aus Kunststoff oder aus einem thermoplastischen Elastomer bestehen.

3. Ansaugkrümmer nach Anspruch 1 oder 2,
**dadurch gekennzeichnet, daß**
das Kernmaterial (7, 8) des Ansaugkrümmers PA6, PA66 und/oder ein thermoplastischer Kunststoff ist.

4. Verfahren zur Herstellung eines Ansaugkrümmers nach einem der Ansprüche 1 bis 3,
**dadurch gekennzeichnet, daß**
das verflüssigte Material der Dichtungsbereiche (5) und separat hiervon das verflüssigte Kernmaterial (7,8) des Ansaugkrümmers in eine Gußform (1, 2, 3) eingebracht werden.

5. Verfahren nach Anspruch 4,
**dadurch gekennzeichnet, daß**
das Material der Dichtungsbereiche (5) und das Kernmaterial (7, 8) bei ihrem Zusammentreffen in der Gussform (1, 2, 3) beide noch nicht beziehungsweise noch nicht vollständig ausgehärtet sind.

6. Verfahren zur Herstellung eines Ansaugkrümmers nach einem der Ansprüche 1 bis 3 durch Füllen einer Gussform (1, 2, 3) mit einem verflüssigten Material,
**dadurch gekennzeichnet, daß**
das Füllen der Dichtungsbereiche (4) innerhalb der Gussform unter Prozessbedingungen erfolgt, welche die Entstehung eines im verfestigten Zustand weichen, elastischen Materials begünstigen.
